Europäisches Patentamt

(19) European Patent Office

Office européen des brevets

(11) Veröffentlichungsnummer: **0 032 590**
**B1**

(12) **EUROPÄISCHE PATENTSCHRIFT**

(45) Veröffentlichungstag der Patentschrift:
14.03.84

(51) Int. Cl.³: **H 04 Q 3/00**, H 04 M 19/00

(21) Anmeldenummer: **80108200.9**

(22) Anmeldetag: **24.12.80**

(54) Schaltungsanordnung zum Erkennen der Teilnehmermeldung in Fernsprechvermittlungsanlagen.

(30) Priorität: **17.01.80 DE 3001497**

(43) Veröffentlichungstag der Anmeldung:
**29.07.81 Patentblatt 81/30**

(45) Bekanntmachung des Hinweises auf die Patenterteilung:
**14.03.84 Patentblatt 84/11**

(84) Benannte Vertragsstaaten:
**AT BE FR IT**

(56) Entgegenhaltungen:
**US - A - 3 321 583**
**US - A - 3 746 798**
**US - A - 3 829 619**

(73) Patentinhaber: **Telefonbau und Normalzeit GmbH,
Mainzer Landstrasse 128-146 Postfach 4432,
D-6000 Frankfurt (Main) (DE)**

(72) Erfinder: **Lauer, Walter, Dipl.-Ing.,
Emmerich-Josef-Strasse 52, D-6230 Frankfurt-Höchst
(DE)**
Erfinder: **Pönitz, Gerd, Ing.grad, Rhönstrasse 17,
D-6050 Offenbach (DE)**

Schaltungsanordnung zum Erkennen der Teilnehmermeldung in
Fernsprechvermittlungsanlagen

Die Erfindung betrifft eine Schaltungsanordnung zum Erkennen der Teilnehmermeldung in Fernsprechvermittlungsanlagen, bei denen die Rufwechselstromquelle in Reihe mit der Speisegleichstromquelle geschaltet ist, und mindestens ein Widerstand in dem zur Teilnehmeranschlußleitung gehörenden Schleifenstromkreis liegt, an dem ein Teil der Rufspannung und/oder der Speisegleichspannung abfällt, wobei an dem im Schleifenstromkreis liegenden Widerstand zwei entgegengesetzt gepolte Dioden angeschlossen sind.

Bei Fernsprechvermittlungsanlagen kommt es darauf an, die Meldung eines angerufenen Teilnehmers schnell, aber ohne fälschliche Erkennung zu erfassen. Dies gilt besonders dann, wenn diese Meldung während der Aussendung des Rufstromes erfolgt. Es muß dann auch noch der Rufstrom möglichst schnell abgeschaltet werden.

Dabei besteht die Forderung, daß die Schaltmittel, die eine Teilnehmermeldung erkennen sollen, nicht auf den Rufstrom allein ansprechen. In der Relaistechnik genügt es, das für die Teilnehmermeldung zuständige Schleifenrelais so zu verzögern, daß es während einer Halbwelle des Rufwechselstroms nicht ansprechen kann. Erst wenn zu dem Wechselstromfluß auf der durch das Schließen der Schleife verursachte Gleichstromfluß hinzukommt, schaltet das Relais. Da sich beide Ströme überlagern und während einer Halbwelle addieren, wird dabei auch das erwünschte schnelle Ansprechen erreicht.

Auch bei elektronischen Schaltmitteln kann im Prinzip eine Verzögerungsschaltung angewendet werden. Diese muß jedoch so ausreichend dimensioniert werden, daß keine Fehlschaltungen vorkommen. Wenn dies mit analogen Mitteln, beispielsweise Kondensatoren, geschieht, die fest im Stromkreis angeordnet sind, kann sich die Verzögerung auch auswirken, wenn bei der Teilnehmermeldung eigentlich ein schnelles Ansprechen erwünscht ist.

Um diesen Effekt auszuschließen, wird in einigen Schaltungsanordnungen die durch den Gleichstromfluß im Bezug zum Nulldurchgang veränderte Amplitude des Rufwechselstroms zur Erkennung der Teilnehmermeldung ausgenutzt.

Ein auf diesem Prinzip beruhendes Verfahren ist angegeben in der DE-OS 2 357 294. Hier wird der über die Teilnehmeranschlußleitung fließende Rufwechselstrom verglichen mit einem von der gleichen Spannungsquelle kommenden, aber nicht über die Teilnehmeranschlußleitung fließenden Rufwechselstrom. Die Verschiebung der beiden Nulldurchgänge des Wechselstroms, die beim Hinzukommen des Speisegleichstroms entsteht, wird als Kriterium für die Teilnehmermeldung ausgewertet.

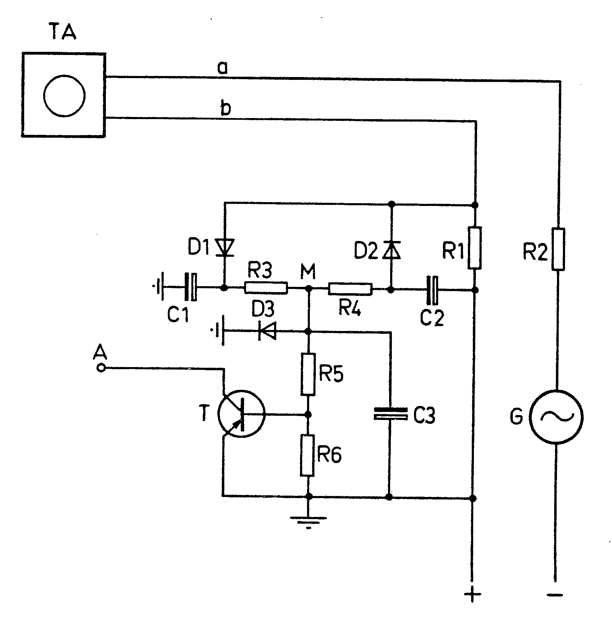

Eine andere Möglichkeit, das fälschliche Erkennen der Teilnehmermeldung zu vermeiden, ist das Ausfiltern der Rufstromfrequenz, so daß das Erkennungsschaltmittel auf den Rufstrom gar nicht ansprechen kann. Wie eine solche Anordnung aufgebaut ist, geht aus der Abbildung und der Beschreibung der DE-AS 2 305 594 hervor. Hier ist ein Filter an den in der Teilnehmeranschlußleitung liegenden Widerstand angeschlossen, das als Tiefpaß ausgelegt ist und die Auswirkung der Rufspannung zum Erkennungsschaltmittel hin unterdrückt.

Beide hier erwähnte Anordnungen sind relativ aufwendig und müssen entsprechend der Rufspannungsfrequenz dimensioniert werden. Da solche Anordnungen meist pro Teilnehmeranschluß vorhanden sein müssen, ist jegliche Einsparung von großer Bedeutung, weil große Stückzahlen in einer Fernsprechvermittlungsanlage benötigt werden.

Weiterhin ist aus der US-PS 3 746 798 eine Schaltungsanordnung bekannt, bei der Opto-Koppler eingesetzt sind, um das Abheben des Handapparates bei einer Fernsprechteilnehmerstelle erkennen zu können. Zu diesem Zweck sind die Leuchtdioden der Opto-Koppler im Rufstromkreis antiparallel geschaltet, und die Fototransistoren sind in einem getrennten Stromkreis so angeordnet, daß die gestellte Aufgabe erfüllt wird. Um ein fehlerfreies Arbeiten der gesamten Anordnung zu erreichen, sind in den Stromkreisen der Leuchtdioden Regelwiderstände vorzusehen, die entsprechend dem Widerstand der Anschlußleitung so abzugleichen sind, daß bei kurzer Anschlußleitung nicht zu viel Strom über die Leuchtdioden fließt und daß bei langer Anschlußleitung genügend Strom zu ihrer Aussteuerung zur Verfügung steht. Wegen der bei Opto-Kopplern üblichen unterschiedlichen Kopplungsfaktoren ist es außerdem erforderlich, daß ein Schwellwertschalter eingesetzt wird, der nur dann anspricht, wenn auf der Teilnehmeranschlußleitung ein Speisegleichstrom fließt. Nur auf diese Weise ist es möglich, ein fehlerhaftes Ansprechen der gesamten Schaltungsanordnung zu verhindern.

Um den hohen Aufwand an Bauteilen, der beim Einsatz von Leuchtdioden erforderlich ist, zu reduzieren, ist es Aufgabe der Erfindung, eine Schaltungsanordnung vorzustellen, die mit einem sehr geringen Aufwand an preiswerten Bauteilen das Erkennen einer Teilnehmermeldung ermöglicht.

Diese Aufgabe wird dadurch gelöst, daß die zweiten Anschlüsse der antiparallel geschalteten Dioden direkt über zwei gleich große Widerstände so miteinander verbunden sind, daß sich am Mittelpunkt zwischen den Widerständen ein Nullpotential ausbildet, daß an den Mittelpunkt für die Steuerung eines Transistors ein Spannungsteiler angeschlossen ist, so daß sich an der Basis des Transistors ebenfalls Nullpotential bildet, wenn nur Rufwechselstrom fließt, und daß dieses Potential beim durch die Teilnehmermeldung hervorgerufenen Fließen des Speisegleichstroms so verschoben wird, daß der Transistor durchgesteuert werden kann und ein Ausgangssignal liefert.

Mit dieser Anordnung wird in vorteilhafter Weise erreicht, daß die Erkennung der Teilnehmermeldung unabhängig von Rufstromfrequenz und Größe der Spannung sicher erfolgt. Die wenigen preiswerten Bauteile beanspruchen wenig Platz und lassen sich zu einem Schaltkreis, beispielsweise in Dickfilmtechnik, leicht zusammenfassen.

Ein Ausführungsbeispiel der Erfindung wird nachfolgend anhand einer Zeichnung näher erläutert. Wenn ein Teilnehmer TA über seine Anschlußleitung a/b gerufen wird, so fließt der Rufstrom über: den Minuspol der Batterie, den Rufstromgenerator G, den Widerstand R2 zur Leitung a über den Wecker des Teilnehmerapparates TA, zur Leitung b, den Widerstand R1 zum Pluspol der Batterie. Am Widerstand R1 ist die Erkennerschaltung angeschlossen, die ein Ausgangssignal A liefern soll, wenn beim Abnehmen des Handapparates am Teilnehmerapparat ein Gleichstromfluß zustandekommt. Die Schaltungsanordnung soll nicht ansprechen, wenn nur Rufwechselstrom über die Teilnehmeranschlußleitung a/b fließt. Dies wird auf folgende Weise erreicht. Die am Widerstand R1 angeschlossenen Dioden D1 und D2 lassen jeweils eine Halbwelle des Rufwechselstroms durch, so daß sich an den gleichgroßen Widerständen R3 und R4 eine Gleichspannung aufbaut. Am Mittelpunkt M zwischen den beiden Widerständen bildet sich daraufhin ein Potential, das entsprechend der Toleranzen der Widerstände nur unwesentlich über dem geerdeten, also Nullpotential führenden Pluspol der Batterie liegt. Der daraufhin über den aus den Widerständen R5 und R6 gebildeten Spannungsteiler fließende Strom reicht nicht aus, um den Transistor T durchzusteuern.

Wird dagegen an der Teilnehmerstelle TA der Handapparat abgenommen, so kommt ein Gleichstromfluß zustande, wodurch am Widerstand R1 ein erhöhter Spannungsabfall entsteht. Das am Widerstand R1 entstehende Minuspotential wird von der Diode D2 durchgelassen und ist in der Lage, das Potential am Mittelpunkt M zu einem negativen Wert hin zu verschieben. Es fließt daraufhin über den Spannungsteiler (R5, R6) ein Strom, wodurch der Transistor T ausgesteuert wird und das Ausgangssignal A liefert.

Damit eine Glättung und erhöhte Störsicherheit erreicht wird, sind die Kondensatoren C1 bis C3 wie in der Schaltungsanordnung dargestellt angeordnet. Die Diode D3 schützt den Transistor vor zu hoher Ansteuerspannung. Die Anordnung ist leicht zu dimensionieren und universell einsetzbar.

## Patentansprüche

1. Schaltungsanordnung zum Erkennen der Teilnehmermeldung in Fernsprechvermittlungsanlagen, bei denen die Rufwechselstromquelle (G) in Reihe mit der Speisegleichstromquelle geschaltet ist, und mindestens ein Widerstand (R1) in dem zur Teilnehmeranschlußleitung (a, b) gehörenden Schleifenstromkreis liegt, an dem ein Teil der Rufspannung und/oder der Speisegleichspannung abfällt, wobei an dem im Schleifenstromkreis liegenden Widerstand (R1) zwei entgegengesetzt gepolte Dioden (D1, D2) angeschlossen sind, dadurch gekennzeichnet, daß die zweiten Anschlüsse der antiparallel geschalteten Dioden (D1, D2) direkt über zwei gleichgroße Widerstände (R3, R4) so miteinander verbunden sind, daß sich am Mittelpunkt (M) zwischen den Widerständen (R3, R4) ein Nullpotential ausbildet, daß an den Mittelpunkt (M) für die Steuerung eines Transistors (T) ein Spannungsteiler (R5, R6) angeschlossen ist, so daß sich an der Basis des Transistors (T) ebenfalls Nullpotential bildet, wenn nur Rufwechselstrom fließt, und daß dieses Potential beim durch die Teilnehmermeldung hervorgerufenen Fließen des Speisegleichstroms so verschoben wird, daß der Transistor (T) durchgesteuert werden kann und ein Ausgangssignal (A) liefert.

2. Schaltungsanordnung nach Anspruch 1, dadurch gekennzeichnet, daß an den Mittelpunkt (M) ein Entstörkondensator (C3) angeschaltet ist.

3. Schaltungsanordnung nach Anspruch 1, dadurch gekennzeichnet, daß an die den Rufwechselstrom gleichrichtende Dioden (D1, D2) Glättungskondensatoren (C1, C2) geschaltet sind.

## Claims

1. Circuit for recognizing the response of a subscriber in telephone exchanges with an a.c. ringing generator (G) and a DC feeding source connected in series and at least one resistor (R1) within the loop circuit belonging to the subscriber line (a, b), where a part of the ringing voltage drops, and two diodes (D1, D2) which are opposing connected across said resistor (R1), comprising the second connectors of the opposing diodes (D1, D2) connected in parallel are directly linked via two resistors (R3, R4) with equal resistance, thus zero potential appears between said resistors (R3, R4) at centre (M); a voltage divider (R5, R6) connected to said centre (M) for driving a transistor (T) having also zero potential at its base lead, if ringing current only is passing, and said potential is drifted such, when feeding current appears caused by the response of the subscriber, that transistor (T) is switched through for supplying an output signal (A).

2. Circuit as claimed in claim 1, comprising a capacitor (C3) for interference suppression connected to centre (M).

3. Circuit as claimed in claim 1, comprising smoothing capacitors (C1, C2) connected to the diodes rectifying the ringing a.c.

## Revendications

1. Agencement de circuit pour détecter la réponse d'abonné dans des installations de communications téléphoniques, dans lesquelles la source de courant alternatif d'appel (G) est branchée en série avec la source de courant continu d'alimentation, et au moins une résistance (R1) est branchée dans le circuit à boucle associé au conducteur de raccordement d'abonné (a, b), dans laquelle une partie de la tension d'appel et/ou de la tension continue d'alimentation est abaissée, des diodes polarisées en sens opposés (D1, D2) étant reliées à la résistance (R1) placée dans le circuit à boucle, caractérisé en ce que les secondes connexions des diodes (D1, D2) branchées en antiparallèle sont reliées entre elles directement, par l'intermédiaire de deux résistances (R3, R4) de même grandeur, de façon qu'il s'établisse en un point-milieu (M) entre les résistances (R3, R4) un potentiel nul, en ce que le point-milieu (M) est relié pour la commande d'un transistor (T) à un diviseur de tension (R5, R6) de façon qu'il s'établisse également à la base du transistor (T) un potentiel nul lorsqu'il ne passe qu'un courant alternatif d'appel et en ce que ce potentiel, lors d'un passage du courant continu d'alimentation provoqué par la réponse d'abonné, est décalé de telle sorte que le transistor (T) peut être rendu conducteur et fournit un signal de sortie (A).

2. Agencement de circuit selon la revendication 1, caractérisé en ce qu'un condensateur d'antiparasitage (C3) est relié au point-milieu (M).

3. Agencement de circuit selon la revendication 1, caractérisé en ce que des condensateurs de filtrage (C1, C2) sont reliés aux diodes (D1, D2) redressant le courant alternatif d'appel.